# EUROPEAN PATENT SPECIFICATION

(11) **EP 3 859 850 B1**
(45) Date of publication and mention of the grant of the patent: **24.05.2023**
(21) Application number: 19949554.0
(22) Date of filing: 03.12.2019
(51) Int. Cl.: H01M 4/13, H01M 50/105, H01M 50/184, H01M 4/36, H01M 4/38, H01M 4/505, H01M 4/525, H01M 4/587, H01M 10/0525, H01M 10/0585

(54) **SECONDARY BATTERY AND DEVICE CONTAINING SAME**
SEKUNDÄRBATTERIE UND VORRICHTUNG DAMIT
BATTERIE SECONDAIRE ET DISPOSITIF LA COMPORTANT

(43) Date of publication of application: 04.08.2021
(73) Proprietor: Contemporary Amperex Technology Co., Limited, Ningde City, Fujian PRC 352100 (CN)
(72) Inventor: DONG, Miaomiao, Ningde City Fujian, PRC 352100 (CN); ZHANG, Chenchen, Ningde City Fujian, PRC 352100 (CN)
(74) Representative: Boult Wade Tennant LLP
(86) International application number: PCT/CN2019/122732
(87) International publication number: WO 2021/108994

(56) References cited:
- CN-A- 103 155 207
- CN-A- 106 558 657
- CN-A- 108 807 974
- CN-A- 108 807 974
- CN-A- 110 387 090
- CN-B- 107 359 335
- CN-U- 209 461 494
- JP-A1-WO2016 063 868
- KR-A- 20160 060 526

## Description

### TECHNICAL FIELD

The present application relates to the field of electrochemical technology, more particularly to a secondary battery and an apparatus containing the secondary battery.

### BACKGROUND

As a new kind of high-voltage, high-energy density rechargeable battery, secondary batteries are a major trend in the development of new energy batteries due to their outstanding characteristics such as light weight, high energy density, no pollution, no memory effect, and long service life.

At present, using silicon-based materials with high gram capacity as a negative active material has great advantages in improving energy density of the secondary batteries. However, negative active materials have the issue of volume expansion and contraction during charge and discharge cycles, especially those containing silicon-based materials are prone to severe volume expansion and contraction during charge and discharge cycle, which limits the service life of batteries. The above issues are particularly prominent when the secondary battery is packaged in a bag.

JP WO2016063868A discloses a pouch battery comprising mixed graphite and silicon anode and NCM cathode.

CN108807974A discloses a lithium ion battery comprising a positive active material having a chemical formula of LiaNixCoyMzO2, 0.95≤a≤1.2, x>0, y>0, z>0, M is one or two selected from a group consisting of Mn and Al. At least a part of the positive active material is single (crystal) particle. The average particle size D50 of the positive active material is 2 µm - 11µm. A pressing density of the positive film was between 3.1 g/cm³ and 3.5 g/cm³.In view of the above, it is indeed necessary to provide a secondary battery that can solve the above-mentioned issues.

### SUMMARY

In view of the above issues in the background, a first aspect of the present application provides a secondary battery having a higher energy density, which secondary battery can have both a good high-temperature storage performance and safety performance

In order to achieve the above-mentioned object of the present application, the secondary battery provided by the first aspect of the present application comprises a package bag and a battery core arranged in the package bag, the battery core comprising a positive electrode plate, a negative electrode plate and a separator, the positive electrode plate comprising a positive current collector and a positive electrode film disposed on at least one surface of the positive electrode current collector and comprising a positive active material; and the negative electrode plate comprising a negative electrode current collector and a negative electrode film provided on at least one surface of the negative electrode current collector and comprising a negative active material, wherein the positive active material comprises one or more of lithium nickel cobalt manganese oxide and lithium nickel cobalt aluminum oxide, and at least a part of the positive active material comprises a single crystal particle; the negative active material comprises a silicon-based material and a graphite material; and the package bag has a sealing width of from 3 mm to 8 mm; the single crystal particles is present in the positive active material in a mass percentage of from 10% to 20%; the silicon-based material is present in the negative active material in a mass percentage in the range of 15% to 30%; and the negative active material has an average particle size of from 7 µm to 15 µm.

Compared with the prior art, the present application produces at least the following beneficial effects.

The secondary battery of the present application comprises a specific type of positive active material and negative active material, and the sealing width of the package bag is controlled within a certain range, so that the battery can not only have a sufficient overcurrent capability, but also can ensure to have a better tensile resistance at a tab welding position while having a higher energy density, thereby effectively improving the high-temperature storage performance and safety performance of the battery.

### DESCRIPTION OF EMBODIMENTS

In order to clearly explain the purposes, the technical solutions and the beneficial technical effects of the present disclosure, the present disclosure will be described in detail below with reference to the embodiments. It should be understood that the embodiments described herein are merely used to illustrate the present disclosure, but not intended to limit the present disclosure.

For the sake of brevity, the present disclosure explicitly describes some numerical ranges. However, any lower limit can be combined with any upper limit as an unspecified range; any lower limit can be combined with any other lower limit as an unspecified range, and any upper limit can be combined with any other upper limit as an unspecified range. Further, although not explicitly described, each point or single value between endpoints of a range is included in the range. Thus, each point or single value, as a lower limit or an upper limit, can be combined with any other point or single value or combined with any other lower or upper limit to form an unspecified range.

In the description herein, it should be noted that, unless otherwise stated, the recitation of numerical ranges by "above" and "below" include all numbers within that range including the endpoints. As used herein, "a", "an", "the", "at least one", and "one or more" are used interchangeably, unless indicated otherwise and the recitation of "more" in the phrase "one or more" includes two or more.

The above is not intended to describe all disclosed embodiments or implementations. The exemplary embodiments are described in details as below. Throughout the present disclosure, a series of embodiments provide a guidance such that these embodiments can be used in various combinations. In the present disclosure, merely the representative embodiments are presented and should not be construed as to be exhaustive. The scope of protection is defined by the appended claims. Features describing details of further embodiments are defined in the dependent claims.

According to the present application, the secondary battery comprises a package bag and a battery core arranged in the package bag, the battery core comprising a positive electrode plate, a negative electrode plate and a separator, the positive electrode plate comprising a positive current collector and a positive electrode film disposed on at least one surface of the positive electrode current collector and comprising a positive active material; and the negative electrode plate comprising a negative electrode current collector and a negative electrode film provided on at least one surface of the negative electrode current collector and comprising a negative active material, wherein the positive active material comprises one or more of lithium nickel cobalt manganese oxide and lithium nickel cobalt aluminum oxide, and at least a part of the positive active material comprises a single crystal particle; the negative active material comprises a silicon-based material and a graphite material; and the package bag has a sealing width of from 3 mm to 8 mm; the single crystal particles are present in the positive active material in a mass percentage of from 10% to 20%; the silicon-based material is present in the negative active material in a mass percentage in the range of 15% to 30%; and the negative active material has an average particle size of from 7 µm to 15 µm.

The inventors found through a lot of research that when a secondary battery comprises a specific type of positive active material and negative active material, and the sealing width of the package bag is controlled within a certain range, so that the battery can have a better high-temperature storage performance and safety performance while having a higher energy density.

In the secondary battery of the present application, the sealing area on the package bag is an important factor affecting the safety performance of the battery. In the context related to the secondary battery of the present application, the "sealing area" refers to an area formed by sealing up the edges of, for example, a film or films to form a package bag into which a positive electrode plate, a negative electrode plate, a separator and an electrolyte have been packed. In the sealing area, the sealing width refers to the width of the area where the edges of the package bag are in contact with each other and joined together. Controlling the width of the sealing area within a certain range can not only ensure sufficient over-current capacity, but also ensure good tensile resistance at a tab welding position under the required capacity of battery core, thereby ensuring that the battery core has an acceptable electrical performance and safety performance while having a high energy density. In the secondary battery of the present application, the sealing width of the package bag is within in the range of 3 mm to 8 mm, preferably from 3 mm to 5 mm.

In the secondary battery of the present application, preferably, a ratio of the sealing width to a length of the battery core is from 0.01 to 0.02.

The inventors of the present application also found that the package bag having a sealing strength of the sealing area satisfying 30N≤F≤200N, preferably 40N≤F≤100N can ensure the integrity of the battery core under high-temperature gas production conditions and inhibit gas production.

In the secondary battery of the present application, the positive active material comprises one or more of lithium nickel cobalt manganese oxide and lithium nickel cobalt aluminum oxide, and at least a part of the positive active material comprises a single crystal particle. The positive active material in the form of a single crystal particle can improve the compacted density and ductility of the entire positive electrode plate while reducing the contact area between the positive active material and the electrolyte, reducing the occurrence of interface side reactions, reducing gas production, and further improving the cycle performance of the lithium ion battery.

In the secondary battery of the present application, the single crystal particle is present in the positive active material in a mass percentage range of 10% to 20%.

The single crystal particles being present in the positive active material in an excessive mass percentage will affect the cycle performance of batteries.

In some embodiments of the present application, the positive active material has an average particle size of from 8 µm to 12 µm, preferably from 8.5 µm to 10 µm.

In embodiments of the present application, preferably, the positive active material comprises one or more of materials having the general formula LiₐNi_{b}Co_{c}M_{d}M'ₑO_{f}A_{g} or materials having the general formula LiₐNi_{b}Co_{c}M_{d}M'ₑO_{f}A_{g} with a coating on at least a part of the surface in which 0.8≤a≤1.2, 0.5≤b<1, 0<c< 1, 0<d< 1, 0≤e≤0.1, 1≤f≤2, 0≤g≤ 1, M is one or more selected from Mn and Al, M' is one or more selected from Zr, Al, Zn, Cu, Cr, Mg, Fe, V, Ti and B, and A is one or more selected from N, F, S, and Cl. In addition to the above materials, the positive active material may also comprise lithium nickel oxide, lithium manganese oxide, lithium iron phosphate, lithium manganese phosphate, lithium iron manganese phosphate, lithium cobalt oxide and modified compounds thereof. However, the present application is not limited to these materials, other conventionally known materials that can be used as positive active materials for lithium-ion batteries can also be used. These positive active materials may be used alone or in combination of two or more. Preferably, the positive active material can be selected from LiNi_{0.8}Co_{0.1}Mn_{0.1}O₂, LiNi_{0.805}Co_{0.1}Mn_{0.095}O₂, and combinations thereof.

In the secondary battery of the present application, the silicon-based material is present in the negative active material in a mass percentage of from 15% to 30%. During the charge and discharge cycle of the secondary battery, ions undergo solid-phase conduction inside the negative active material particles. Generally, the smaller the negative active material particles, the shorter the diffusion path of active ions inside the particles is, which can reduce the occurrence of side reactions, thereby improving the high-temperature storage gas production performance of batteries. The larger the negative active material particles, the more beneficial the improvement of the gram capacity of the negative active material is, thereby effectively increasing the energy density of batteries. Therefore, it is very important to reasonably design the average particle size of the negative active material, which can realize the battery with both high energy density and high-temperature storage performance to a certain extent. In the secondary battery of the present application, the average particle size of the negative active material is in the range of 7 µm to 15 µm, preferably from 9 µm to 12 µm.

In the secondary battery of the present application, the porosity of the positive and negative films can be designed to ensure the battery core to have better electron and ion transmission. During the charge and discharge cycle of batteries, ions undergo liquid phase conduction (including liquid phase diffusion and electromigration) in the porous electrode film. Therefore, the porosity of the electrode plate film will affect the transmission of electrons and ions. Generally, the greater the porosity of the electrode plate film, the better the wettability of the electrolyte is, the higher the liquid phase diffusion rate is, and the easier the reduction of ions at high-rate charge is, thereby avoiding the formation of metal dendrites. If the porosity is too large, the energy density of the battery will be significantly negatively affected. If the porosity is too small, it is not conducive to the infiltration of the electrolyte, and the diffusion rate of the liquid phase will also be affected, thereby affecting the cycle performance of batteries. Therefore, there is also a certain requirement for the porosity of the electrode plate film. The porosity of the electrode plate film is required to meet a certain range to ensure that it is fully infiltrated by the electrolyte and excessive side reactions are prevented. Preferably, the porosity Pₚₒₛᵢₜᵢᵥₑ of the positive electrode film satisfies: 6%≤ Pₚₒₛᵢₜᵢᵥₑ≤15%. The porosity P_{negative} of the negative electrode film satisfies: 15%≤P _{negative} ≤25%.In the secondary battery of the present application, the compacted density of the positive and negative films can also be designed to ensure that the secondary battery has an improved cycle life. In the secondary battery, when the compacted density of the positive and negative films are both high, side reactions of the battery core can be reduced, thereby increasing the volume energy density of batteries. However, the compacted density of the positive and negative films should not be too high. If the compacted density of the negative electrode film is too high, the electrolyte cannot infiltrate it completely, and then during the discharge process, lithium ions cannot be intercalated in the negative active material through the electrolyte medium, and there is not enough electrolyte to repair the SEI film, resulting in reduced cycle life of secondary batteries. Similarly, if the compacted density of the positive electrode film is too high, the electrolyte cannot infiltrate the positive electrode film completely, and during the charge process, lithium ions cannot be deintercalated, thereby reducing the cycle life of the lithium ion battery. What is more, the positive electrode particles may be broken during the compaction process, resulting in the formation of new contact interfaces and new side reaction products. Preferably, the compacted density PD ₚₒₛᵢₜᵢᵥₑ of the positive electrode film satisfies 3.3 g/cm³ ≤ PDₚₒₛᵢₜᵢᵥₑ ≤ 3.6 g/cm³, preferably 3.4 g/cm³ ≤ PDₚₒₛᵢₜᵢᵥₑ ≤ 3.5 g/cm³; and the compacted density PD_{negative} of the negative electrode film satisfies 1.6 g/cm³ ≤ PD_{negative} ≤ 1.75g/cm³, preferably 1.65 g/cm³ ≤ PD_{negative} ≤ 1.7 g/cm³

The various parameters involved in the present specification have general meanings known in the art, and can be measured according to methods known in the art. For example, the method given in the examples of the present application may be used for testing.

The configuration and manufacturing method of the secondary battery according to the present application are known per se. Generally, a secondary battery comprises a package bag, and a battery core and an electrolyte provided in the package bag, and the battery core comprises a positive electrode plate, a negative electrode plate, and a separator. The positive and negative electrode plates are immersed in the electrolyte, and the ions move between the positive and negative electrodes with the electrolyte as a medium to realize the charge and discharge of the battery. In order to avoid short-circuit between the positive and negative electrodes through the electrolyte, a separator is required to separate the positive and negative films.

In the secondary battery according to the present application, the specific types and composition of the separator and the electrolyte are not subject to specific limitations, which can be selected according to actual needs.

Specifically, the separator may be selected from polyethylene film, polypropylene film, polyvinylidene fluoride film and their multilayer composite film.

When the battery is a lithium ion battery, as a non-aqueous electrolyte, a lithium salt solution dissolved in an organic solvent is usually used. The lithium salt is, for example, inorganic lithium salts such as LiClO₄, LiPF₆, LiBF₄, LiAsF₆, LiSbF₆, or organic lithium salts such as LiCF₃SO₃, LiCF₃CO₂, Li₂C₂F₄(SO₃)₂, LiN(CF₃SO₂)₂, LiC(CF₃SO₂)₃, LiCₙF₂ₙ₊₁SO₃(n≥2). The organic solvents used in the non-aqueous electrolyte are, for example, cyclic carbonates such as ethylene carbonate, propylene carbonate, butylene carbonate, and vinylene carbonate, chain carbonates such as dimethyl carbonate, diethyl carbonate, and methyl ethyl carbonate, chain esters such as methyl propionate, cyclic esters such as γ-butyrolactone, chain ethers such as dimethoxyethane, diethyl ether, diglyme, and triglyme, cyclic ethers such as tetrahydrofuran and 2-methyltetrahydrofuran, nitriles such as acetonitrile and propionitrile, or mixtures of these solvents.

Hereinafter, a lithium ion secondary battery is taken as an example to briefly describe the secondary battery of the present application.

First, a positive electrode plate of the battery is prepared according to the conventional method in the art. Generally, it is necessary to add a conductive agent (for example, Super P, etc.), and a binder (for example, PVDF), to the above-mentioned positive active material. If necessary, other additives such as PTC thermistor materials can also be added.

These materials are usually mixed together and dispersed in a solvent (such as NMP). Having been stirred homogeneously, they are evenly coated on a positive electrode current collector and then dried to obtain the positive electrode plate. A metal foil such as an aluminum foil or a porous metal plate can be used as the positive electrode current collector. Preferably, the aluminum foil is used.

A negative electrode plate of the present application can be prepared by a well-known method in the art. Usually, a negative active material, an optional conductive agent (such as Super P), a binder (such as SBR), and other optional additives (such as PTC thermistor material) are mixed together and dispersed in a solvent (such as deionized water). Having been stirred homogeneously, they are evenly coated on a negative electrode current collector and then dried to obtain the negative electrode plate. A metal foil such as a copper foil or a porous metal plate can be used as the negative electrode current collector. Preferably, the copper foil is used.

In the above-mentioned positive and negative electrode plates, the proportion of active material in the positive and negative electrode films should not be too low, otherwise it will lead to too low capacity; the proportion of active material in the positive and negative electrode films should not be too high, otherwise it will lead to reduced amount of conductive agent and binder, reduced conductivity of the electrode plate and reduced adhesion degree with the current collector, which in turn leads to a decrease in the electrical performance of the battery core.

It is worth noting that to prepare the positive and negative electrode plates, the current collector can be coated on its both sides or on its one side. When the electrode current collector is coated on its both sides, each parameter is measured for a certain electrode film on one side.

Finally, the positive electrode plate, separator, and negative electrode plate are stacked in order in which the separator is disposed between the positive and negative electrode plates for isolation, and then the stack is wound into a battery core. The battery core is placed into a package bag and then dried. After that, injecting the electrolyte into the package bag is carried out, followed by vacuum packaging, standing, forming, and shaping, thereby obtaining a secondary battery.

Compared with the traditional secondary battery, the present application can allow the secondary battery to improve the high-temperature storage performance and cycle life while having a higher energy density of the battery. Therefore, it is of great significance for the manufacture of battery cores.

A second aspect of the present application provides an apparatus, which comprises any one or more of the secondary batteries described in the first aspect of the present application. The secondary battery may be used as a power source for the apparatus. Preferably, the apparatus can be, not limited to, mobile devices (such as mobile phones, laptop computers), electric vehicles (such as pure electric vehicles, hybrid electric vehicles, plug-in hybrid electric vehicles, electric bicycles, electric scooters, electric golf carts, electric trucks), electric trains, ships and satellites, or energy storage systems.

The following examples further illustrate the beneficial effects of the present application.

### Example

In order to make the purpose of the invention, technical solutions, and beneficial technical effects of the present application clearer, the following further describes the present application in detail with reference to examples. However, it should be understood that the examples of the present application are only for explaining the application, not for limiting the application, and the examples of the application are not limited to the examples given in the specification. The specific experimental conditions or operating conditions that are not specified in the examples follow the conventional conditions, or the conditions recommended by the material supplier.

### I. Preparation of batteries for testing

The batteries of Examples 1-17 and Comparative Examples 1-8 were prepared according to the following methods:

### A) Preparation of a positive electrode plate:

The positive active material (see Table 1 for details), the conductive agent (Super P), and the binder (polyvinylidene fluoride, PVDF) were mixed at a weight ratio of 96:2:2, and then the solvent (N-methyl pyrrolidone NMP) was added with stirring under the action of a vacuum mixer until the system was uniform and transparent, thereby obtaining a positive electrode slurry. The positive electrode slurry was evenly applied to aluminum foil as a positive electrode current collector, and dried at room temperature, which was transferred to an oven for further drying, and then was subjected to cooling press and slitting to obtain the positive electrode plate. The positive electrode film formed from the positive electrode slurry has a compacted density of 3.45g/cm³, and an areal density of 0.313g/1540.25mm².

### B) Preparation of a negative electrode plate

The negative active material (see Table 1 for details), the conductive agent (Super P), sodium methyl cellulose (CMC-Na), and the binder (styrene butadiene rubber) were mixed at a weight ratio of 94.5:1.5:1.5:2.5, and then the solvent (deionized water) was added with stirring under the action of a vacuum mixer until the system was uniform, thereby obtaining the negative electrode slurry. The negative electrode slurry was evenly applied to copper foil as a negative electrode current collector, and dried at room temperature, which was transferred to an oven for further drying, and then was subjected to cooling press and slitting to obtain the negative electrode plate. The negative electrode film formed from the negative electrode slurry has a compacted density of 1.70 g/cm³, and an areal density of 0.125g/1540.25mm².

### C) Preparation of an electrolyte

Ethylene carbonate (EC), methyl ethyl carbonate (EMC), and diethyl carbonate (DEC) were mixed in a volume ratio of 1:1:1 to obtain a mixed organic solvent, and then anhydrous electrolyte (see Table 1 for details) was dissolved in the mixed solvent, to formulate an electrolyte with a concentration of 1 mol/L. D) Separator

A polyethylene film with a thickness of 12 µm was selected as the separator.

### E) Preparation of batteries

The above-mentioned positive electrode plate, separator, and negative electrode plate were stacked in order in which the separator was disposed between the positive and negative electrode plates for isolation, and then the stack was wound into a battery core. The battery core was placed into a packaging shell. Injecting the above prepared electrolyte into the packaging shell was carried out followed by vacuum packaging, standing, forming, and shaping, thereby obtaining a lithium-ion secondary battery. The dimensional size of the package bag of the lithium ion secondary battery was: thickness * width * length = 10.8 mm * 102.8 mm * 308.4 mm.

### II. Determination of parameters

### 1. Sealing width

The length and width of the sealing area was measured with a flying forest ruler.

### 2. Sealing strength

The strength of the sealing area was measured with a tensile machine. Five samples with a length of 8mm were taken from the sealing area of the package bags of examples and comparative examples each. The sample was placed between clamps and the upper and lower ends of the sample was clamped with the clamps respectively. The sample was stretched at a speed of 50 mm/min until the sealing area broke. The tensile value was recorded. The average value of the 5 samples is reported as the seal strength.

### 3. Length of battery core

The length of the battery core in the assembled secondary battery was measure with a high precision micrometer.

### 4. Compacted density D of positive/negative electrode film in g/cm³

Step 1): The mass of the negative electrode film was weighed with a standard balance and the coating area of the negative electrode was measured with a ruler. After that, the mass per unit area in g/cm² of the positive/negative film was calculated.

Step 2): According to the formula, the compacted density D_{positive/negative} of the positive/negative electrode film = the mass per unit area of the positive/negative film in g/cm²/the thickness of the positive/negative electrode film in cm, the compacted density D_{positive/negative} of the positive/negative electrode film was calculated wherein the thickness of the positive/negative film was measured by a high-precision micrometer.

### 5. Average particle size of positive/negative active material in micron

A laser diffraction particle size distribution measuring instrument (Malvem Mastersizer 3000) was used. According to the particle size distribution laser diffraction method GB/T19077-2016, the particle size distribution was measured to obtain the average particle size.

### 6. Porosity P of positive/negative electrode film

According to GB/T24586, the gas displacement method was used for measurement. Porosity P= (V1-V2)/V1* 100%, where V 1 is the apparent volume of the sample, and V2 is the true volume of the sample.

### III. Battery performance test

The above-mentioned batteries of Examples 1-9 and Comparative Examples 1-3 were tested for various battery performances according to the following methods.

### 1. Lithium-ion battery storage performance at 60°C

In each example and comparative example, 10 samples were taken for the following test.

Each sample was charged to 4.2V at a constant current of 1/3C at room temperature, and then charged to a current of 0.05C at a constant voltage of 4.2V. After that, the volume of the battery was tested as V₀. Then, each sample was put into a thermostat at 60°C and stored for 50 days. The battery was removed to measure its volume as V₅₀.

The volume expansion rate (%) of the lithium ion battery after high temperature storage for 50 days = (V₅₀-V₀)/V₀×100%.

The volume expansion rate of each sample was averaged and then recorded.

### 2. Number of battery leakage:

During the process for measuring the storage performance at 60°C, each sample was checked every 5 days, and the appearance of the battery was checked to determine whether it was leaking. A total of 10 times were checked, and the proportion of the number of leaking batteries was counted.

### 3. Actual energy density test

At 25°C, the lithium-ion batteries prepared in the examples and comparative examples were fully charged at a rate of 1/3C and fully discharged at a rate of 1/3C, and then the actual discharge energy was recorded at this time. At 25°C, The lithium ion battery was weighed with an electronic balance. The ratio of the actual discharge energy of the lithium ion battery at 1/3C to the weight of the lithium ion battery was the actual energy density of the lithium ion battery.

### IV. Test results of examples and comparative examples each

The above mentioned batteries of Examples 1-9 and Comparative Examples 1-3 were prepared according to the above methods, and various performance parameters were measured. The results are shown in table 1.

**Table 1: Parameters and battery performance of lithium ion secondary batteries according to Examples 1-9 and Comparative Examples 1-3 of the present application in which Ex. 7 is not according to the present application.**

| No. | Positive Material | | | Negative Material | | Sealing width/mm² | Sealing strength/N | Actual energy density | volume expansion rate (%) at 60°C for 50 days | Leakage Number |
|---|---|---|---|---|---|---|---|---|---|---|
| | Type | Mono/polycrystalline hybrid | Mass percentage of single crystal | Type | Content of silicon-based material/% | | | | | |
| Ex. 1 | NCM811 | Mono/polycrystalline hybrid | 20% | SiO+ Artificial graphite | 25 | 3.5 | 36.3 | 304.82 | 8.2% | 0/10 |
| Ex. 2 | NCM811 | Mono/polycrystalline hybrid | 20% | SiO+ Artificial graphite | 25 | 4.2 | 38.4 | 304.77 | 8.3% | 0/10 |
| Ex. 3 | NCM811 | Mono/polycrystalline hybrid | 20% | SiO+ Artificial graphite | 25 | 5.1 | 42.7 | 304.67 | 8.5% | 0/10 |
| Ex. 5 | NCM811 | Mono/polycrystalline hybrid | 20% | SiO+ Artificial graphite | 25 | 7.2 | 47.1 | 304.46 | 7.4% | 0/10 |
| Ex. 6 | NCM811 | Mono/polycrystalline hybrid | 20% | SiO+ Artificial graphite | 25 | 8.0 | 48.8 | 304.39 | 7.8% | 0/10 |
| Ex. 7^{*} | NCM811 | Mono/polycrystalline hybrid | 5% | SiO+ Artificial graphite | 25 | 4.2 | 38.4 | 304.77 | 19.5% | 1/10 |
| Ex. 8 | NCM811 | Mono/polycrystalline hybrid | 10% | SiO+ Artificial graphite | 25 | 4.2 | 38.9 | 304.77 | 15.6% | 1/10 |
| Ex. 9 | NCM811 | Mono/polycrystalline hybrid | 15% | SiO+ Artificial graphite | 25 | 4.2 | 37.6 | 304.77 | 11.2% | 0/10 |
| CEx. 1 | NCM811 | Mono/polycrystalline hybrid | 20% | SiO+ Artificial graphite | 25 | 2.5 | 30.4 | 304.87 | 9.5% | 2/10 |
| CEx. 2 | NCM811 | Mono/polycrystalline hybrid | 20% | SiO+ Artificial graphite | 25 | 9.0 | 50.2 | 303.27 | 9.2% | 0/10 |
| CEx. 3 | NCM811 | Pure polycrystalline | / | SiO+ Artificial graphite | 25 | 4.2 | 38.2 | 304.72 | 25.4% | 3/10 |

| | | | | | | | | | | |
|---|---|---|---|---|---|---|---|---|---|---|
| * Ex. 7 not according to the invention. | | | | | | | | | | |

It can be seen from the test results in Table 1:
Examples 1-9 and Comparative Examples 1-3 show that when the positive and negative electrodes contain specific active materials, and the sealing width of the package bag is controlled within a range of 3 mm-8mm, not only has the obtained battery a higher energy density, but also the high-temperature storage performance and safety performance of the battery are effectively improved.

Based on the application and teaching of the foregoing specification, those skilled in the art can also make changes and modifications to the foregoing embodiments. Therefore, the present application is not limited to the specific embodiments disclosed and described above, and some modifications and changes to the present application should also fall within the protection scope defined by the claims of the present application. In addition, although some specific terms are used in the present specification, these terms are only for convenience of description and do not constitute any limitation to the present application.

## Claims

1. A secondary battery comprising a package bag and a battery core arranged in the package bag, the battery core comprising a positive electrode plate, a negative electrode plate and a separator, the positive electrode plate comprising a positive current collector and a positive electrode film disposed on at least one surface of the positive electrode current collector and comprising a positive active material; the negative electrode plate comprising a negative electrode current collector and a negative electrode film provided on at least one surface of the negative electrode current collector and comprising a negative active material, **characterized in that**
the positive active material comprises one or more of lithium nickel cobalt manganese oxide and lithium nickel cobalt aluminum oxide, and at least a part of the positive active material comprises a single crystal particle;
the negative active material comprises a silicon-based material and a graphite material; and
the package bag has a sealing width of from 3 mm to 8 mm, as determined according to the description;
the single crystal particles is present in the positive active material in a mass percentage of from 10% to 20%, as determined according to the description;
the silicon-based material is present in the negative active material in a mass percentage in the range of 15% to 30%, as determined according to the description; and
the negative active material has an average particle size of from 7 µm to 15 µm, as determined according to the description.

2. The secondary battery of claim 1, wherein the package bag has a sealing width of 3 mm to 5 mm, as determined according to the description.

3. The secondary battery according to claim 1 or 2, wherein the package bag has a sealing strength of from 30N to 200N, preferably from 40N to 100N, as determined according to the description.

4. The secondary battery according to any one of claims 1 to 3, wherein a ratio of the sealing width to a length of the battery core is from 0.01 to 0.02, as determined according to the description.

5. The secondary battery according to any one of claims 1 to 4, wherein the positive active material has an average particle size of from 8 µm to 12 µm, preferably from 8.5 µm to 10 µm, as determined according to the description; and/or
the negative active material has an average particle size of from 9 µm to 12 µm, as determined according to the description.

6. The secondary battery according to any one of claims 1-5, wherein the positive electrode film has a compacted density PD satisfying 3.3 g/cm³≤ PDₚₒₛᵢₜᵢᵥₑ≤3.6 g/cm³, preferably 3.4 g/cm³≤ PDₚₒₛᵢₜᵢᵥₑ≤3.5 g/cm³, as determined according to the description; and/or
the negative electrode film has a compacted density PD satisfying 1.6 g/cm³≤PD_{negative} ≤1.75g/cm³, preferably 1.65≤PD_{negative}≤1.7, as determined according to the description.

7. The secondary battery according to any one of claims 1-6, wherein the positive electrode film has a porosity P satisfying: 6%≤Pₚₒₛᵢₜᵢᵥₑ≤15%, as determined according to the description; and/or the negative electrode film has a porosity P satisfying: 15%≤P_{negative} ≤25%, as determined according to the description.

8. The secondary battery of claim 1, wherein the graphite material is one or more selected from artificial graphite and natural graphite.

9. The secondary battery according to claim 1, wherein the positive active material comprises one or more of materials having the general formula LiₐNi_{b}Co_{c}M_{d}M'ₑO_{f}A_{g} or materials having the general formula LiₐNi_{b}Co_{c}M_{d}M'ₑO_{f}A_{g} with a coating on at least a part of the surface in which 0.8≤a≤1.2, 0.5≤b<1, 0<c<1, 0<d<1, 0≤e≤0.1, 1≤f≤2, 0 ≤g≤1, M is one or more selected from Mn and Al, M' is one or more selected from Zr, Al, Zn, Cu, Cr, Mg, Fe, V, Ti and B, and A is one or more selected from N, F, S, and Cl.

10. The secondary battery according to claim 1, wherein the positive active material further comprises one or more of lithium nickel oxide, lithium manganese oxide, lithium iron phosphate, lithium manganese phosphate, lithium iron manganese phosphate, lithium cobalt oxide and a modified compound thereof.

11. An apparatus **characterized by** comprising the secondary battery according to any one of claims 1-10.

## Patentansprüche

1. Sekundärbatterie, die eine Verpackungstasche und einen in der Verpackungstasche angeordneten Batteriekern umfasst, wobei der Batteriekern eine positive Elektrodenplatte, eine negative Elektrodenplatte und einen Separator umfasst,
wobei die positive Elektrodenplatte einen positiven Stromkollektor und einen positiven Elektrodenfilm umfasst, der auf mindestens einer Oberfläche des Positivelektroden-Stromkollektors angeordnet ist und ein positives Aktivmaterial umfasst; wobei die negativen Elektrodenplatte einen Negativelektroden-Stromkollektor und einen negativen Elektrodenfilm umfasst, der auf mindestens einer Oberfläche des Negativelektroden-Stromkollektors vorgesehen ist und ein negatives Aktivmaterial umfasst, **dadurch gekennzeichnet, dass**
das positive Aktivmaterial eines oder mehrere von Lithium-Nickel-Cobalt-Manganoxid und Lithium-Nickel-Cobalt-Aluminiumoxid umfasst, und mindestens ein Teil des positiven Aktivmaterials ein Einkristallteilchen umfasst;
das negative Aktivmaterial ein Material auf Siliziumbasis und ein Graphitmaterial umfasst; und
die Verpackungstasche eine Dichtungsbreite von 3 mm bis 8 mm, wie gemäß der Beschreibung bestimmt;
die Einkristallteilchen in der positiven Aktivmaterial in einem Massenanteil von 10% bis 20% vorhanden sind, wie gemäß der Beschreibung bestimmt;
das Material auf Siliziumbasis in dem negativen Aktivmaterial in einem Massenanteil im Bereich von 15% bis 30% vorhanden ist, wie gemäß der Beschreibung bestimmt; und
das negative Aktivmaterial eine mittlere Teilchengröße von 7 µm bis 15 µm aufweist, wie gemäß der Beschreibung bestimmt.

2. Sekundärbatterie nach Anspruch 1, wobei die Verpackungstasche eine Dichtungsbreite von 3 mm bis 5 mm, wie gemäß der Beschreibung bestimmt.

3. Sekundärbatterie nach Anspruch 1 oder 2, wobei die Verpackungstasche eine Dichtungsfestigkeit von 30 N bis 200 N, vorzugsweise von 40 N bis 100 N aufweist, wie gemäß der Beschreibung bestimmt.

4. Sekundärbatterie nach einem der Ansprüche 1 bis 3, wobei ein Verhältnis der Dichtungsbreite zu einer Länge des Batteriekerns 0,01 bis 0,02 beträgt, wie gemäß der Beschreibung bestimmt.

5. Sekundärbatterie nach einem der Ansprüche 1 bis 4, wobei das positive Aktivmaterial eine mittlere Teilchengröße von 8 µm bis 12 µm, vorzugsweise von 8,5 µm bis 10 µm aufweist, wie gemäß der Beschreibung bestimmt; und/oder
das negative Aktivmaterial eine mittlere Teilchengröße von 9 µm bis 12 µm aufweist, wie gemäß der Beschreibung bestimmt.

6. Sekundärbatterie nach einem der Ansprüche 1 bis 5, wobei der positive Elektrodenfilm eine verdichtete Dichte PD aufweist, die 3,3 g/cm³≤ PDₚₒₛᵢₜᵢᵥₑ≤3,6 g/cm³, vorzugsweise 3,4 g/cm³≤ PDₚₒₛᵢₜᵢᵥₑ≤3,5 g/cm³, erfüllt, wie gemäß der Beschreibung bestimmt; und/oder
der negative Elektrodenfilm eine verdichtete Dichte PD aufweist, die 1,6 g/cm³≤PD_{negative}≤1,75g/cm³, vorzugsweise 1,65≤PD_{negative}≤1,7, erfüllt, wie gemäß der Beschreibung bestimmt.

7. Sekundärbatterie nach einem der Ansprüche 1-6, wobei der positive Elektrodenfilm eine Porosität P aufweist, die erfüllt: 6%≤Pₚₒₛᵢₜᵢᵥₑ≤15%, wie gemäß der Beschreibung bestimmt; und/oder der negative Elektrodenfilm eine Porosität P aufweist, die erfüllt: 15%≤P_{negative}≤25%, wie gemäß der Beschreibung bestimmt.

8. Sekundärbatterie nach Anspruch 1, wobei das Graphitmaterial eines oder mehrere aus künstlichem Graphit und natürlichem Graphit ausgewählt ist.

9. Sekundärbatterie nach Anspruch 1, wobei das positive c ein oder mehrere Materialien mit der allgemeinen Formel LiₐNi_{b}Co_{c}M_{d}M'ₑO_{f}A_{g} oder Materialien mit der allgemeinen Formel LiₐNi_{b}Co_{c}M_{d}M'ₑO_{f}A_{g} mit einer Beschichtung auf mindestens einem Teil der Oberfläche, bei der 0,8≤a≤1,2, 0,5≤b<1, 0<c< 1, 0<d<1, 0≤e≤0,1, 1<f<2, 0 ≤ g ≤ 1, M eines oder mehrere aus Mn und Al ausgewählt ist, M' eines oder mehrere aus Zr, Al, Zn, Cu, Cr, Mg, Fe, V, Ti und B ausgewählt ist, und A eins oder mehrere aus N, F, S und Cl ausgewählt ist.

10. Sekundärbatterie nach Anspruch 1, wobei das positive Aktivmaterial ferner eines oder mehrere von Lithiumnickeloxid, Lithiummanganoxid, Lithiumeisenphosphat, Lithiummanganphosphat, Lithiumeisenmanganphosphat, Lithiumcobaltoxid und eine modifizierte Verbindung davon umfasst.

11. Vorrichtung, **dadurch gekennzeichnet, dass** sie die Sekundärbatterie nach einem der Ansprüche 1-10 umfasst.

## Revendications

1. Batterie secondaire comprenant un sac d'emballage et un noyau de batterie disposé dans le sac d'emballage, le noyau de batterie comprenant une plaque d'électrode positive, une plaque d'électrode négative et un séparateur, la plaque d'électrode positive comprenant un collecteur de courant positif et un film d'électrode positive disposé sur au moins une surface du collecteur de courant d'électrode positive et comprenant un matériau actif positif ; la plaque d'électrode négative comprenant un collecteur de courant d'électrode négative et un film d'électrode négative disposé sur au moins une surface du collecteur de courant d'électrode négative et comprenant un matériau actif négatif, **caractérisée en ce que**,
le matériau actif positif comprend un ou plusieurs parmi des oxydes de lithium-nickel-cobalt-manganèse et des oxydes de lithium-nickel-cobalt-aluminium, et au moins une partie du matériau actif positif comprend des particules monocristallines ;
le matériau actif négatif comprend un matériau à base de silicium et un matériau graphite ; et
le sac d'emballage présente une largeur d'étanchéité de 3 mm à 8 mm, qui est mesurée comme décrite dans la description ;
les particules monocristallines représentent dans le matériau actif positif un pourcentage en masse compris entre 10 % et 20 %, qui est mesuré comme décrite dans la description ;
le matériau à base de silicium représente dans le matériau actif négatif un pourcentage en masse compris entre 15% et 30%, qui est mesuré comme décrite dans la description ; et
le matériau actif négatif présente une taille moyenne des particules de 7 µm à 15 µm, qui est mesurée comme décrite dans la description.

2. Batterie secondaire selon la revendication 1, dans laquelle le sac d'emballage présente une largeur d'étanchéité de 3 mm à 5 mm, qui est mesurée comme décrite dans la description.

3. Batterie secondaire selon la revendication 1 ou 2, dans laquelle le sac d'emballage présente une force d'étanchéité de 30 N à 200 N, de préférence de 40 N à 100 N, qui est mesurée comme décrite dans la description.

4. Batterie secondaire selon l'une quelconque des revendications 1 à 3, dans laquelle un rapport de la largeur d'étanchéité à une longueur du noyau de batterie est compris entre 0,01 et 0,02, qui est mesuré comme décrite dans la description.

5. Batterie secondaire selon l'une quelconque des revendications 1 à 4, dans laquelle le matériau d'actif positif présente une taille moyenne des particules de 8 µm à 12 µm, de préférence de 8,5 µm à 10 µm, qui est mesurée comme décrite dans la description ; et/ou
le matériau actif négatif présente une taille moyenne des particules de 9 µm à 12 µm, qui est mesurée comme décrite dans la description.

6. Batterie secondaire selon l'une quelconque des revendications 1 à 5, dans laquelle le film d'électrode positive présente une densité tassée PD satisfaisant à 3,3 g/cm³≤PDₚₒₛᵢₜᵢᵥₑ≤3,6 g/cm³, de préférence 3,4 g/cm³≤PDₚₒₛᵢₜᵢᵥₑ≤3,5 g/cm³, qui est mesurée comme décrite dans la description ; et/ou
le film d'électrode négative présente une densité tassée PD satisfaisant 1,6 g/cm³≤PD_{négative}≤1,75 g/cm³, de préférence 1,65≤PD_{négative}≤1,7, qui est mesurée comme décrite dans la description.

7. Batterie secondaire selon l'une quelconque des revendications 1 à 6, dans laquelle le film d'électrode positive présente une porosité P satisfaisant à : 6%≤Pₚₒₛᵢₜᵢᵥₑ≤15%, qui est mesurée comme décrite dans la description ; et/ou le film d'électrode négative présente une porosité P satisfaisant à : 15%≤P_{négative}≤25%, qui est mesurée comme décrite dans la description.

8. Batterie secondaire selon la revendication 1, dans laquelle le matériau graphite est un ou plusieurs choisis parmi le graphite artificiel et le graphite naturel.

9. Batterie secondaire selon la revendication 1, dans laquelle le matériau actif positif comprend un ou plusieurs matériaux ayant la formule générale LiₐNi_{b}Co_{c}M_{d}M'ₑO_{f}A_{g} ou matériaux ayant la formule générale LiₐNi_{b}Co_{c}M_{d}M'ₑO_{f}A_{g}, avec un revêtement sur au moins une partie de la surface, où 0,8≤a≤1,2, 0,5≤b<1, 0<c<1, 0<d<1, 0≤e≤0,1, 1≤f≤2, 0≤g≤1, M est un ou plusieurs choisis parmi Mn et Al, M' est un ou plusieurs choisis parmi Zr, Al, Zn, Cu, Cr, Mg, Fe, V, Ti et B, et A est un ou plusieurs choisis parmi N, F, S et Cl.

10. Batterie secondaire selon la revendication 1, dans laquelle le matériau actif positif comprend en outre un ou plusieurs choisis parmi l'oxyde de lithium-nickel, l'oxyde de lithium-manganèse, le phosphate de lithium-fer, le phosphate de lithium-manganèse, le phosphate de lithium-fer-manganèse, l'oxyde de lithium-cobalt et leurs composés modifiés.

11. Dispositif **caractérisé en ce qu'**il comprend la batterie secondaire selon l'une quelconque des revendications 1 à 10.
